# EUROPÄISCHE PATENTSCHRIFT

(11) **EP 4 065 863 B1**
(45) Veröffentlichungstag und Bekanntmachung des Hinweises auf die Patenterteilung: **12.03.2025**
(21) Anmeldenummer: 20812254.9
(22) Anmeldetag: 24.11.2020
(51) Int. Cl.: F16H 61/00, F16H 63/34, F16H 57/027, F16H 57/02

(54) **GETRIEBEEINRICHTUNG FÜR EIN ELEKTRISCH ANTREIBBARES FAHRZEUG, ANTRIEBSEINRICHTUNG FÜR EIN ELEKTRISCH ANTREIBBARES FAHRZEUG UND FAHRZEUG**
TRANSMISSION DEVICE FOR AN ELECTRICALLY DRIVEABLE VEHICLE, DRIVE DEVICE FOR AN ELECTRICALLY DRIVEABLE VEHICLE, AND VEHICLE
DISPOSITIF DE TRANSMISSION POUR UN VÉHICULE POUVANT ÊTRE ENTRAÎNÉ ÉLECTRIQUEMENT, DISPOSITIF D'ENTRAÎNEMENT POUR UN VÉHICULE POUVANT ÊTRE ENTRAÎNÉ ÉLECTRIQUEMENT, ET VÉHICULE

(30) Priorität: 29.11.2019 DE 102019132499
(43) Veröffentlichungstag der Anmeldung: 05.10.2022
(73) Patentinhaber: Valeo eAutomotive Germany GmbH, 91056 Erlangen (DE)
(72) Erfinder: FÜRSTENHÖFER, Christian Gerhard, 90768 Fürth (DE); PAUL, Stefan, 91361 Pinzberg (DE); HAAS, Bernd, 90402 Nürnberg (DE)
(74) Vertreter: Valeo Powertrain Systems
(86) Internationale Anmeldenummer: PCT/EP2020/083125
(87) Internationale Veröffentlichungsnummer: WO 2021/105082

(56) Entgegenhaltungen:
- EP-A1- 3 670 973
- EP-A2- 1 256 747
- WO-A1-2017/057070
- DE-A1- 102015 217 875
- DE-A1- 102017 124 499

## Beschreibung

Die vorliegende Erfindung betrifft eine Getriebeeinrichtung für ein elektrische antreibbares Fahrzeug, eine Antriebseinrichtung für ein elektrisch antreibbares Fahrzeug und ein Fahrzeug.

Das Dokument DE 10 2015 217 875 A1 offenbart ein Antriebssystem mit einer elektrischen Maschine und einem Getriebe für ein Kraftfahrzeug. Das Getriebe weist eine Getriebeabtriebswelle und ein Getriebegehäuse sowie eine Parksperre auf.

Das Dokument DE 10 2017 124499 A1 zeigt eine Getriebeeinrichtung für ein elektrisch antreibbares Fahrzeug mit einem Getriebeelement und einer Parksperre, die in einem Getriebegehäuse angeordnet sind.

Das nachveröffentlichte Dokument EP 3 670 973 A1 zeigt eine Getriebeeinrichtung mit einem Getriebeelement, einer Parksperre, einer Anschlussvorrichtung und einer Druckausgleichsvorrichtung sowie ein Getriebegehäuse.

Durch die Integration einer Parksperre in ein Getriebegehäuse kann Bauraum eingespart werden, der insbesondere im Hinblick auf den Einsatz der Getriebeeinrichtung in einer elektrischen Antriebseinrichtung eines Fahrzeugs knapp ist. Allerdings ergeben sich daraus besondere Herausforderungen wegen des Vorhandenseins von Schmiermitteln und höheren Temperaturen im Inneren des Getriebegehäuses. Insbesondere ein Parksperrenaktuator der Parksperre kann empfindlich bis hin zu einem Funktionsausfall auf das Schmiermittel reagieren.

Der Erfindung liegt die Aufgabe zugrunde, eine bauraumsparende und robust betreibbare Möglichkeit zur Anordnung einer Parksperre in einem Getriebegehäuse anzugeben.

Diese Aufgabe wird erfindungsgemäß gelöst durch eine Getriebeeinrichtung für ein elektrisch antreibbares Fahrzeug nach Anspruch 1.

Die Erfindung beruht auf der Erkenntnis, dass Funktionsausfälle des Parksperrenaktuators häufig auf das Eindringen von Schmiermitteln in den Parksperrenaktuator zurückzuführen sind. Dieses Eindringen beruht auf einem Druckunterschied zwischen dem Inneren des Parksperrenaktuators und seiner Umgebung. Durch die bei der erfindungsgemäßen Getriebeeinrichtung vorgesehene Druckausgleichsvorrichtung wird ein Druckausgleich zwischen dem Inneren des Parksperrenaktuators und dem Äußeren des Getriebegehäuses realisiert und dadurch ein Eindringen des Schmiermittels verhindert. Dies ermöglicht vorteilhafterweise einen robusteren Betrieb der Getriebeeinrichtung. Dadurch, dass die Druckausgleichsvorrichtung durch den ersten Steckverbinder der ersten Anschlussvorrichtung verläuft, wird mit Vorteil kein zusätzlicher Bauraum für eine Durchführung der Druckausgleichsvorrichtung benötigt. Typischerweise weist das Getriebegehäuse eine Getriebegehäuseöffnung auf, welche von der ersten Anschlussvorrichtung durchsetzt wird. In bevorzugter Ausgestaltung ist dabei vorgesehen, dass der erste Steckverbinder der ersten Anschlussvorrichtung in der Getriebegehäuseöffnung angeordnet ist und/oder am Getriebegehäuse befestigt ist. Die Parksperre kann dazu eingerichtet sein, über die erste Anschlussvorrichtung elektrisch versorgt und/oder angesteuert zu werden.

Es wird bei der erfindungsgemäßen Getriebeeinrichtung bevorzugt, wenn die Druckausgleichsvorrichtung einen Fluidleitelement, insbesondere einen Schlauch oder ein Rohr, aufweist, welche den ersten Steckverbinder mit dem Inneren des Parksperrenaktuators verbindet. Vorzugsweise ist das Fluidleitelement aus einem Kunststoff, insbesondere PTFE, gebildet.

Dabei kann mit Vorteil vorgesehen sein, dass das Fluidleitelement gemeinsam mit der Kabelanordnung vom Parksperrenaktuator zum ersten Steckverbinder geführt ist.

Dadurch kann der im Getriebegehäuse vorgesehene Bauraum optimal durch die erste Anschlussvorrichtung und das Fluidleitelement ausgenutzt werden. Es ist beispielsweise möglich, dass das Fluidleitelement parallel zu Einzelkabeln der Kabelanordnung geführt ist. In bevorzugter Ausgestaltung ist ferner vorgesehen, dass die Kabelanordnung und das Fluidleitelement gemeinsam ummantelt sind.

Es ist außerdem von Vorteil, wenn der erste Steckverbinder ein Steckverbindergehäuse,

Kontaktelemente und im Steckverbindergehäuse ausgebildete Durchgangsöffnungen, die jeweils dazu ausgebildet sind eines der Kontaktelemente aufzunehmen, aufweist, wobei das Fluidleitelement in eine der Durchgangsöffnungen eingesetzt ist. Auf diese Weise lässt sich die gasdurchlässige Verbindung im Bereich des ersten Steckverbinders aufwandsarm realisieren, indem beispielsweise bei einem handelsüblichen Steckverbinder eine Durchgangsöffnung nicht mit einem Kontaktelement versehen wird und stattdessen das Fluidleitelement aufnimmt. Typischerweise ist vorgesehen, dass in einem Teil der Durchgangsöffnungen jeweils ein Kontaktelement angeordnet ist.

Auch kann vorgesehen sein, dass der zweite Steckverbinder ein Steckverbindergehäuse, Kontaktelemente und im Steckverbindergehäuse ausgebildete Durchgangsöffnungen, die jeweils dazu ausgebildet sind eines der Kontaktelemente aufzunehmen, aufweist, wobei das Fluidleitelement in eine der Durchgangsöffnungen eingesetzt ist. Es kann vorgesehen sein, dass in einem Teil der Durchgangsöffnungen jeweils ein Kontaktelement angeordnet ist.

Parksperrenaktuatorseitig, insbesondere an einem Parksperrenaktuatorgehäuse, kann ein zum zweiten Steckverbinder der Anschlussvorrichtung gegengleicher Steckverbinder vorgesehen sein, durch welchen sich die Druckausgleichsvorrichtung ins Innere des Parksperrenaktuators erstreckt. Für diesen parksperrenaktuatorseitigen Steckerverbinder gilt ebenfalls, dass er ein Steckverbindergehäuse, Kontaktelemente und im Steckverbindergehäuse ausgebildete Durchgangsöffnungen, die jeweils dazu ausgebildet sind eines der Kontaktelemente aufzunehmen, aufweisen kann, wobei eine Durchgangsöffnung einen Freiraum zum Inneren des Parksperrenaktuatorgehäuses als Teil der Druckausgleichsvorrichtung bereitstellt.

In Weiterbildung der erfindungsgemäßen Getriebeeinrichtung kann vorgesehen sein, dass diese ferner eine zweite Anschlussvorrichtung mit einer Kabelanordnung und einem an einem Ende dieser Kabelanordnung angeordneten Steckverbinder, bzw. ersten Steckverbinder, durch welchen eine elektrische Steckverbindung mit dem ersten Steckverbinder der ersten Anschlussvorrichtung ausgebildet oder ausbildbar ist, umfasst, wobei die Druckausgleichsvorrichtung ein Fluidleitelement, insbesondere einen Schlauch oder ein Rohr, aufweist, wobei sich ein Ende des Fluidleitelements in den Steckverbinder der zweiten Anschlussvorrichtung erstreckt. Dieses Fluidleitelement kann auch als zweites Fluidleitelement aufgefasst bzw. bezeichnet werden. Das Fluidleitelement der ersten Anschlussvorrichtung kann dann auch als erstes Fluidleitelement aufgefasst bzw. bezeichnet werden.

Hinsichtlich des Steckverbinders der zweiten Anschlussvorrichtung kann vorgesehen sein, dass er ein Steckverbindergehäuse, Kontaktelemente und im Steckverbindergehäuse ausgebildete Durchgangsöffnungen, die jeweils dazu ausgebildet sind eines der Kontaktelemente aufzunehmen, aufweist, wobei das zweite Fluidleitelement in eine der Durchgangsöffnungen eingesetzt ist. Es kann vorgesehen sein, dass in einem Teil der Durchgangsöffnungen jeweils ein Kontaktelement angeordnet ist.

Bezüglich der zweiten Anschlussvorrichtung kann vorgesehen sein, dass diese am anderen Ende der Kabelanordnung einen zweiten Steckverbinder aufweist.

Ferner ist es zweckmäßig, wenn die Druckausgleichsvorrichtung am anderen Ende des Fluidleitelements einen Druckausgleichsadapter aufweist. Der Druckausgleichsadapter dient insbesondere dem Abschluss der Druckausgleichsvorrichtung außerhalb des Getriebegehäuses.

Der Druckausgleichsadapter kann beispielsweise eine Membran und/oder ein Befestigungsmittel zum Befestigen des Druckausgleichsadapters aufweisen. Der Druckausgleichsadapter kann ferner eine Schutzeinrichtung, beispielweise eine Schutzkappe, zum Schutz der Membran umfassen. Typischerweise realisiert die Schutzkappe einen Schutz gegen Wasser und/oder einen Schutz gegen Fremdkörper, insbesondere im Sinne einer entsprechenden IP-Schutzklasse.

In vorteilhafter Ausgestaltung ist ferner vorgesehen, dass der Druckausgleichsadapter und der zweite Steckverbinder der zweiten Anschlussvorrichtung als separate Komponenten ausgebildet sind. So kann der Druckausgleichsadapter außerhalb des Gehäuses an einem geeigneten Ort getrennt vom zweiten Steckverbinder angebracht werden.

Wie bereits eingangs angedeutet wird es bei der erfindungsgemäßen Getriebeeinrichtung ferner bevorzugt, wenn im Getriebegehäuse ein Schmiermittelbad zur Schmierung des Getriebeelements vorgesehen ist und sich die Parksperre zumindest teilweise im Schmiermittelbad befindet. Wegen des erfindungsgemäß realisierten Druckausgleichs ist dann Vorteilhafterweise auch eine Anordnung der Parksperre im Schmiermittelbad möglich, wodurch bislang ungenutzte Anordnungspositionen der Parksperre im Getriebegehäuse erschlossen werden.

Die der Erfindung zugrunde liegende Aufgabe wird ferner gelöst durch eine Antriebseinrichtung für ein elektrisch antreibbares Fahrzeug, umfassend eine elektrische Maschine, eine erfindungsgemäße Getriebeeinrichtung und eine eine Drehbewegung der elektrischen Maschine auf die Getriebeeinrichtung übertragende Welle.

Dabei kann vorgesehen sein, dass das Getriebegehäuse Teil eines die elektrische Maschine, die Getriebeeinrichtung und die Welle einhausenden Gehäuses ist. Bevorzugt ist der Druckausgleichsadapter durch das Befestigungsmittel am Gehäuse, insbesondere an einem Lagerschild, befestigt.

Die Antriebseinrichtung kann ferner einen Inverter umfassen, wobei der zweite Steckverbinder der zweiten Anschlussvorrichtung elektrisch mit dem Inverter verbunden sein kann. Der Inverter ist typsicherweise dazu eingerichtet, eine Gleichspannung in eine die elektrische Maschine versorgende Wechselspannung zu wandeln.

Die der Erfindung zugrunde liegende Aufgabe wird schließlich auch gelöst durch ein Fahrzeug, umfassend eine zum Antreiben des Fahrzeugs eingerichtete erfindungsgemäße Antriebseinrichtung.

Weitere Vorteile und Einzelheiten der vorliegenden Erfindung ergeben sich aus den im Folgenden beschriebenen Ausführungsbeispielen sowie anhand der Zeichnungen, wobei die vorliegende Erfindung durch die Ansprüche bestimmt wird. Diese sind schematische Darstellungen und zeigen:
- Fig. 1: eine perspektivische Ansicht eines Ausführungsbeispiels der erfindungsgemäßen Antriebseinrichtung mit einem Ausführungsbeispiel der erfindungsgemäßen Getriebeeinrichtung;
- Fig. 2: eine Detailansicht des Inneren der Getriebeeinrichtung;
- Fig. 3: eine perspektivische Ansicht der ersten Anschlussvorrichtung der Getriebeeinrichtung;
- Fig. 4: eine Detailansicht der ersten Anschlussvorrichtung im Bereich ihres ersten Steckverbinders;
- Fig. 5: eine perspektivische Ansicht der zweiten Anschlussvorrichtung der Getriebeeinrichtung; und
- Fig. 6: eine Prinzipskizze eines Ausführungsbeispiels des erfindungsgemäßen Fahrzeugs.

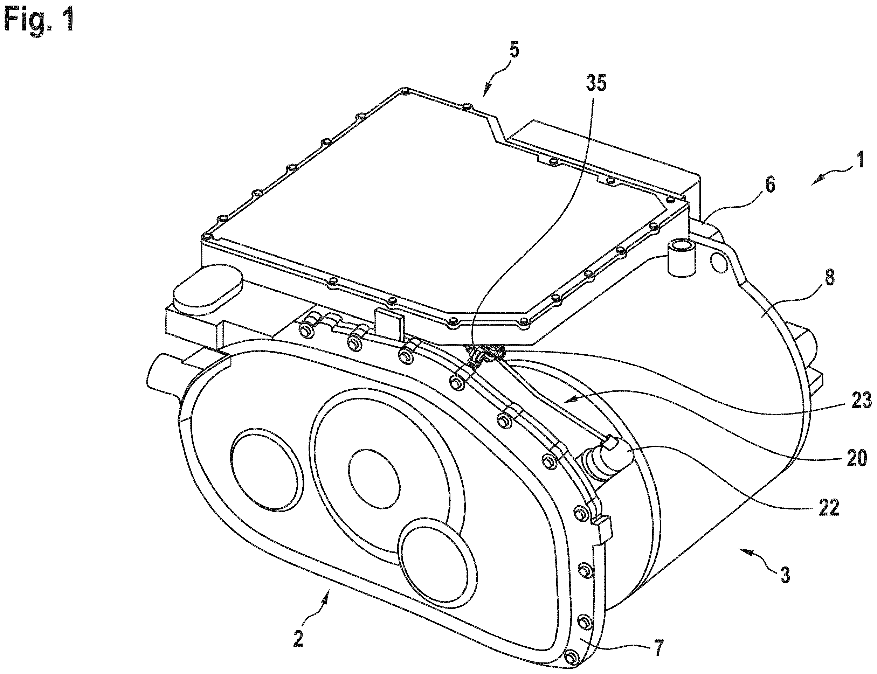

Fig. 1 ist eine perspektivische Ansicht eines Ausführungsbeispiels einer Antriebseinrichtung 1 mit einem Ausführungsbeispiel einer Getriebeeinrichtung 2.

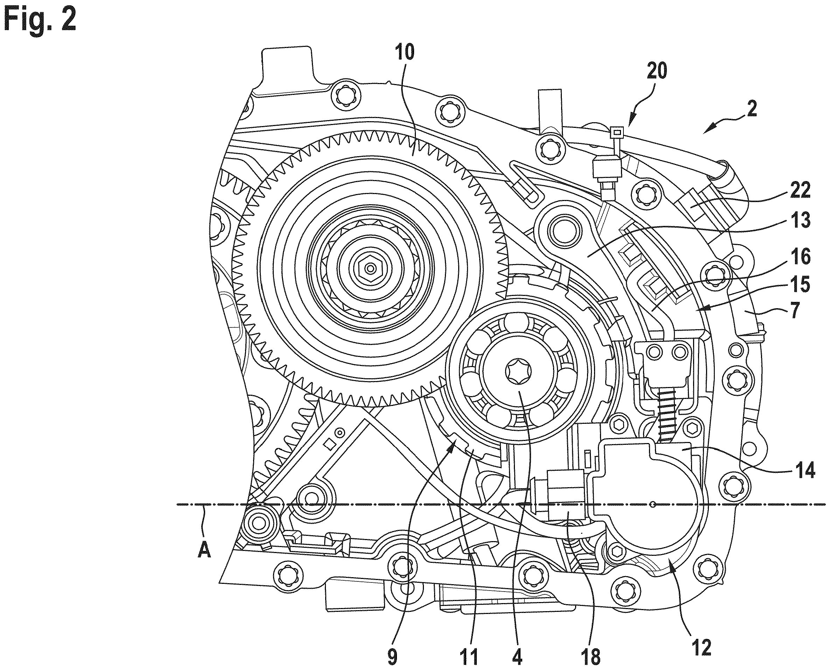

Daneben umfasst die Antriebseinrichtung 1 eine elektrische Maschine 3, eine Welle 4 (siehe Fig. 2), die eine Drehbewegung der elektrischen Maschine 3 auf die Getriebeeinrichtung 2 überträgt, und einen Inverter 5, der dazu eingerichtet ist, eine Gleichspannung in eine die elektrische Maschine 3 versorgende Wechselspannung zu wandeln. Ein Gehäuse 6 der Antriebseinrichtung 1 umfasst ein zur Getriebeeinrichtung 2 gehöriges Getriebegehäuse 7 der Getriebeeinrichtung 2 und ein Maschinengehäuse 8, welches auch den Inverter 5 einhaust. Alternativ kann der Inverter 5 auch in einem separaten Gehäuse angeordnet sein, welches an einem die Getriebeeinrichtung 2 und die elektrische Maschine 3 einhausenden Gehäuse befestigt wird.

Fig. 2 ist eine Detailansicht eines Inneren der Getriebeeinrichtung 2.

Die Getriebeeinrichtung 1 umfasst ein Getriebeelement 9, das mit weiteren Getriebeelementen 10 gekoppelt ist, um eine von der drehfest mit dem Getriebeelement 9 verbunden Welle 4 bereitgestellte Drehbewegung zu übersetzen. An dem Getriebeelement 9 ist ferner ein Parksperrenrad 11 einer Parksperre 12 befestigt, durch welche das Getriebeelement 9 blockierbar ist. Dazu weist die Parksperre 12 ferner eine Parksperrenklinke 13 auf, die mittels eines Parksperrenaktuators 14 der Parksperre 12 in Eingriff mit dem Parksperrenrad 11 gebracht werden kann.

Die Getriebeelemente 9, 10 sowie die Parksperre 12 sind durch das Getriebegehäuse 7 eingehaust. Zur Schmierung der Getriebeelemente 9, 10 weist die Getriebeeinrichtung 1 ein Schmiermittelbad auf, dessen betriebsüblicher Füllstand durch eine gestrichelte Linie A in Fig. 1 dargestellt ist. Ersichtlich befindet sich die Parksperre 12 teilweise im Schmiermittelbad.

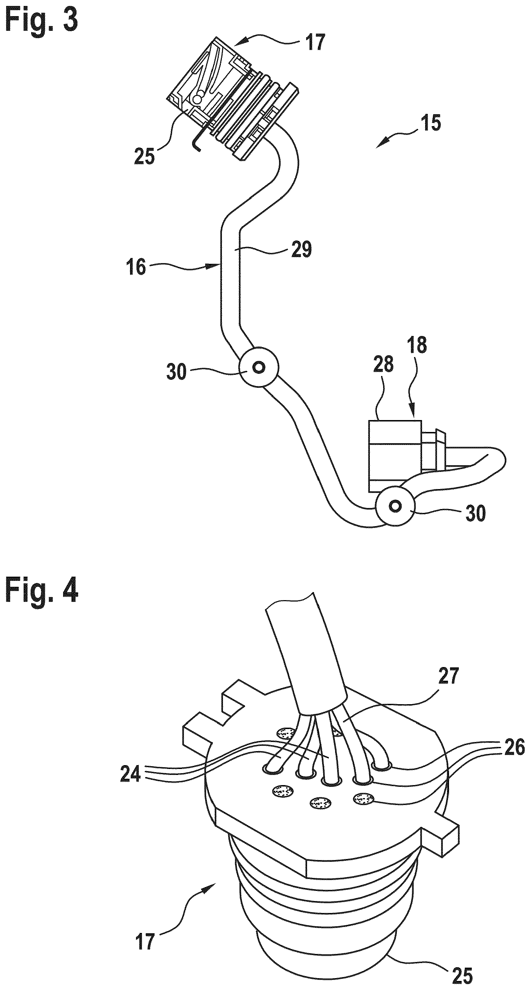

Daneben umfasst die Getriebeeinrichtung 2 eine erste Anschlussvorrichtung 15, die eine sich im Getriebegehäuse 7 erstreckende Kabelanordnung 16, die einen - ein Fig. 2 verdeckten - ersten Steckverbinder 17 (siehe Fig. 3) und einen zweiten Steckverbinder 18 umfasst und zur elektrischen Versorgung und Ansteuerung des Parksperrenaktuators 14 dient. Die Steckverbinder 17, 18 sind an gegenüberliegenden Enden der Kabelanordnung 16 angebracht, wobei der zweite Steckverbinder 18 mit einem - in Fig. 1 durch den zweiten Steckverbinder 18 verdeckten - Steckverbinder des Parksperrenaktuators 14 verbunden ist. Durch den ersten Steckverbinder 17 ist die Kabelanordnung 16 vom Äußeren des Getriebegehäuses 7 her kontaktierbar.

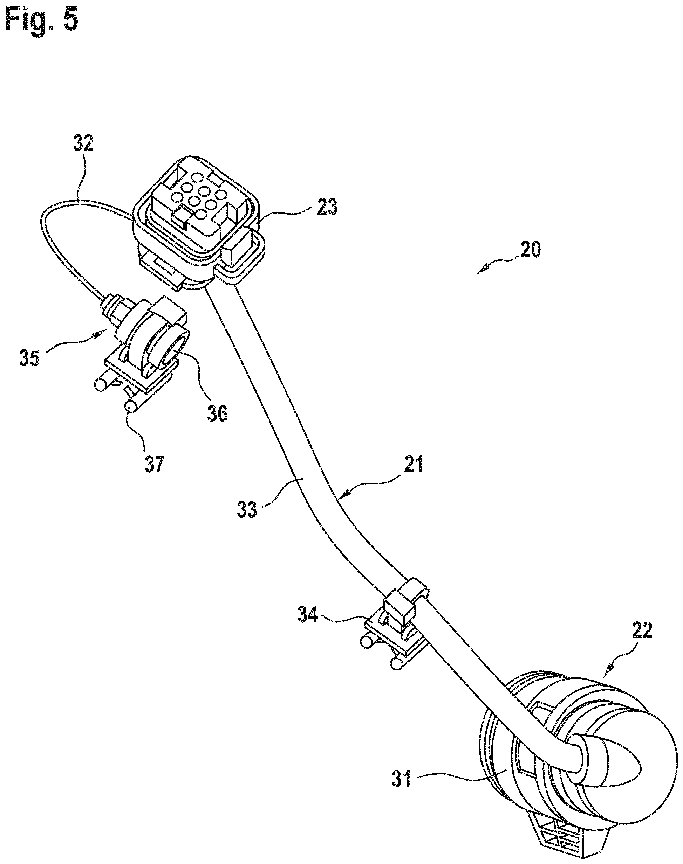

Außerdem umfasst die Getriebeeinrichtung 2 eine zweite Anschlussvorrichtung 20, die eine sich außerhalb des Getriebegehäuses 7 erstreckende Kabelanordnung 21, einen ersten Steckverbinder 22 und einen zweiten Steckverbinder 23 (siehe Fig. 1 und Fig. 5) umfasst. Durch den ersten Steckverbinder 22 der zweiten Anschlussvorrichtung ist eine Steckverbindung mit dem ersten Steckverbinder 17 der ersten Anschlussvorrichtung 20 ausgebildet. Der zweite Steckverbinder 23 bildet mit einem in Fig. 1 verdeckten Steckverbinder des Inverters 5 eine weitere Steckverbindung aus, so dass der Inverter 5 den Parksperrenaktuator 14 über die Anschlussvorrichtung 15, 20 elektrisch versorgen und ansteuern kann.

Fig. 3 und Fig. 4 zeigen die erste Anschlussvorrichtung 15, wobei Fig. 3 eine perspektivische Ansicht ist und Fig. 4 eine Detailansicht im Bereich des ersten Steckverbinders 17 ist.

Wie aus Fig. 4 ersichtlich ist, weist die Kabelanordnung 16 mehrere Einzelkabel 24 auf. Der erste Steckverbinder 17 umfasst ein Steckverbindergehäuse 25, in welchem mehrere Durchgangsöffnungen 26 ausgebildet sind. Ein Teil der Durchgangsöffnungen 26 nimmt jeweils ein in den Figuren verdecktes Kontaktelement auf, das elektrisch mit einem der Einzelkabel 24 innerhalb des Steckverbindergehäuses 25 verbunden ist. Wenn die Anzahl der Durchgangsöffnungen 26 die um eins erhöhte Anzahl der Einzelkabel 24 - wie im vorliegenden Ausführungsbeispiel - übersteigt, kann ein Teil der Durchgangsöffnungen 26 gasdicht verschlossen sein. Der zweite Steckverbinder 18 ist analog dazu aufgebaut, sodass die Einzelkabel 27 dort mit entsprechenden Kontaktelementen, die ebenfalls in entsprechenden Durchgangsöffnungen eines Steckverbindergehäuses 28 des zweiten Steckverbinders 18 aufgenommen sind, elektrisch verbunden sind.

Da wegen des im Inneren des Getriebegehäuses 7 (siehe Fig. 2) befindlichen Schmiermittels die Gefahr besteht, dass dieses wegen eines im Parksperrenaktuator 14 (siehe Fig. 2) auftretenden Unterdrucks in diesen eindringt und dabei Funktionsstörungen oder sogar Beschädigung verursachen kann, ist eine Druckausgleichsvorrichtung vorgesehen, die eine gasdurchlässige Verbindung zwischen dem Inneren des Parksperrenaktuators 14 und dem Äußeren des Getriebegehäuses 7 ausbildet.

Die Druckausgleichsvorrichtung umfasst dazu zunächst ein erstes Fluidleitelement 27, das den ersten Steckverbinder 17 der ersten Anschlussvorrichtung 15 gasdurchlässig mit dem zweiten Steckverbinder 18 der ersten Anschlussvorrichtung 15 verbindet. Im vorliegenden Ausführungsbeispiel ist das Fluidleitelement 27 exemplarisch durch einen Schlauch aus PTFE ausgebildet. Dazu mündet ein Ende des ersten Fluidleitelements 27 in eine weder durch ein Einzelkabel 27 belegte noch verschlossene Durchgangsöffnung 26. Das andere Ende des ersten Fluidleitelements 27 mündet in einer Durchgangsöffnung des Steckverbindergehäuses 28 des zweiten Steckverbinders 18, die ebenfalls weder durch ein Kontaktelement belegt noch verschlossen ist. Dabei wird das erste Fluidleitelement 27 gemeinsam mit den Einzelkabeln 24 der Kabelanordnung 16 innerhalb einer Ummantelung 29 der Kabelanordnung 16 geführt, welche zusätzlich Befestigungselemente 30 (siehe Fig. 3) zur Befestigung der ersten Anschlussvorrichtung 15 im Getriebegehäuse 7 aufweist.

Zur Ausbildung der gasdurchlässigen Verbindung durch die Druckausgleichsvorrichtung ist der Steckverbinder des Parksperrenaktuators 14 (siehe Fig. 2) gasdurchlässig mit dem Inneren des Parksperrenaktuators 14 verbunden. Dazu ist der Steckverbinder des Parksperrenaktuators 14, der im Wesentlichen analog zum ersten Steckverbinder 17 der ersten Anschlussvorrichtung 15 ausgebildet ist, gasdurchlässig mit dem Inneren des Parksperrenaktuators ausgebildet, so dass der Steckverbinder des Parksperrenaktuators 14 ein parksperrenaktuatorseitiges Ende der Druckausgleichsvorrichtung ausbildet. Dazu kann der Steckverbinder des Parksperrenaktuators 14 analog zum ersten Steckverbinder 17 der ersten Anschlussvorrichtung 15 ebenfalls Durchgangsöffnungen aufweisen, von denen eine gasdurchlässig ist.

Fig. 5 ist eine perspektivische Ansicht der zweiten Anschlussvorrichtung 20 der Getriebeeinrichtung 2.

Die Kabelanordnung 21 der zweiten Anschlussvorrichtung 20 weist analog zur Kabelanordnung 16 der ersten Anschlussvorrichtung 15 mehrere Einzelkabel auf. Der erste Steckverbinder 22 umfasst, ebenfalls analog zum ersten Steckverbinder 17 der ersten Anschlussvorrichtung 15 ein Steckverbindergehäuse 31, in welchem mehrere Durchgangsöffnungen ausgebildet sind. Ein Teil der Durchgangsöffnungen nimmt jeweils ein Kontaktelement auf, das elektrisch mit einem der Einzelkabeln innerhalb des Steckverbindergehäuses 31 verbunden ist. Wenn die Anzahl der Durchgangsöffnungen die um eins erhöhte Anzahl der Einzelkabel - wie im vorliegenden Ausführungsbeispiel - übersteigt, ist ein Teil der Durchgangsöffnungen gasdicht verschlossen.

Die Druckausgleichsvorrichtung weist ein zweites Fluidleitelement 32 auf. Ein Ende des zweiten Fluidleitelements 32 mündet in einer Durchgangsöffnung des Steckverbindergehäuses 31, die weder von einem Kontaktelement belegt noch gasdicht verschlossen ist. Dabei wird das zweite Fluidleitelement 32 gemeinsam mit den Einzelkabeln der Kabelanordnung 21 innerhalb einer Ummantelung 33 der Kabelanordnung 21 geführt, welche zusätzlich ein Befestigungselement 34 zur Befestigung der zweiten Anschlussvorrichtung 20 am Getriebegehäuse 7 aufweist. Kurz vor dem zweiten Steckverbinder 23 zweigt das zweite Fluidleitelement 32 von der Kabelanordnung 21 ab.

Die Druckausgleichsvorrichtung weist am anderen Ende des zweiten Fluidleitelements 32 einen Druckausgleichsadapter 35 auf, wobei der Druckausgleichsadapter 35 und der zweite Steckverbinder 23 ersichtlich als separate Komponenten ausgebildet sind. Der Druckausgleichsadapter 35 weist eine Membran 36 auf, welche das Eindringen von Schmutz und dergleichen in die Druckausgleichsvorrichtung verhindert. Ferner umfasst der Druckausgleichsadapter 35 ein Befestigungsmittel 37. Durch dieses in der Druckausgleichsadapter 35, wie aus Fig. 1 ersichtlich, im Bereich des Inverters 5 am Getriebegehäuse 7 befestigt.

Der zweite Steckverbinder 23 der zweiten Anschlussvorrichtung ist mit dem Steckverbinder des Inverters 5 verbunden, um den Parksperrenaktuator 14 vom Inverter 5 aus elektrisch zu versorgen und anzusteuern.

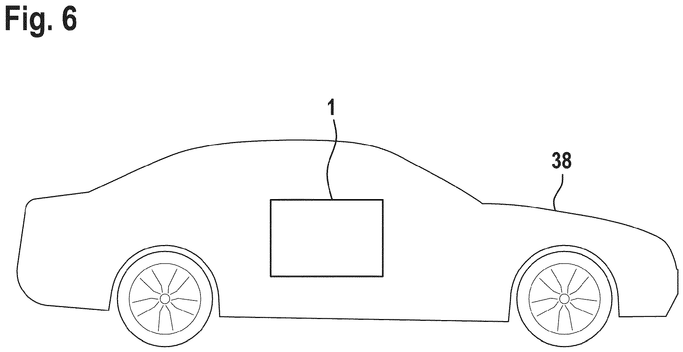

Fig. 6 ist eine Prinzipskizze eines Ausführungsbeispiels eines Fahrzeugs 38. Dieses umfasst die zum Antreiben des Fahrzeugs 38 eingerichtete Antriebseinrichtung 1.

## Patentansprüche

1. Getriebeeinrichtung (2) für ein elektrisch antreibbares Fahrzeug (38), umfassend
- ein Getriebeelement (9),
- eine Parksperre (12), durch die das Getriebeelement (9) blockierbar ist und die einen Parksperrenaktuator (14) aufweist, und
- ein Getriebegehäuse (7), welches das Getriebeelement (9) und die Parksperre (12) einhaust, **gekennzeichnet durch**,
- eine erste Anschlussvorrichtung (15) mit einer sich im Getriebegehäuse (7) erstreckenden Kabelanordnung (16) und einem ersten Steckverbinder (17),
durch den ein erstes Ende der Kabelanordnung (16) vom Äußeren des Getriebegehäuses (7) her kontaktierbar ist, wobei ein zweites Ende der Kabelanordnung (16) mit dem Parksperrenaktuator (14) elektrisch verbunden ist, und
- eine Druckausgleichsvorrichtung, die durch den ersten Steckverbinder (17) der ersten Anschlussvorrichtung (15) verläuft und eine gasdurchlässige Verbindung zwischen dem Inneren des Parksperrenaktuators (14) und dem Äußeren des Getriebegehäuses (7) ausbildet, wobei
das zweite Ende der Kabelanordnung (16) durch einen zweiten Steckverbinder (18) der ersten Anschlussvorrichtung (15) elektrisch mit dem Parksperrenaktuator (14) verbunden ist und sich die Druckausgleichsvorrichtung in den zweiten Steckverbinder (18) erstreckt.

2. Getriebeeinrichtung nach Anspruch 1, wobei
die Druckausgleichsvorrichtung einen Fluidleitelement (27) aufweist, welches den ersten Steckverbinder (17) mit dem Inneren des Parksperrenaktuators (14) verbindet.

3. Getriebeeinrichtung nach Anspruch 2, wobei
das Fluidleitelement (27) gemeinsam mit der Kabelanordnung (16) vom Parksperrenaktuator (14) zum ersten Steckverbinder (17) geführt ist.

4. Getriebeeinrichtung nach Anspruch 2 oder 3, wobei
der erste Steckverbinder (17) ein Steckverbindergehäuse (25), Kontaktelemente und im Steckverbindergehäuse ausgebildete Durchgangsöffnungen, die jeweils dazu ausgebildet sind eines der Kontaktelemente aufzunehmen, aufweist, wobei das Fluidleitelement (27) in eine der Durchgangsöffnungen eingesetzt ist.

5. Getriebeeinrichtung nach einem der vorhergehenden Ansprüche, ferner umfassend
eine zweite Anschlussvorrichtung (20) mit einer Kabelanordnung (21) und einem an einem Ende dieser Kabelanordnung (21) angeordneten ersten Steckverbinder (22), durch welchen eine elektrische Steckverbindung mit dem ersten Steckverbinder (17) der ersten Anschlussvorrichtung (15) ausgebildet oder ausbildbar ist, wobei die Druckausgleichsvorrichtung ein Fluidleitelement (32) aufweist, wobei sich ein Ende des Fluidleitelements (32) in den ersten Steckverbinder (22) der zweiten Anschlussvorrichtung (20) erstreckt.

6. Getriebeeinrichtung nach Anspruch 5, wobei
die zweite Anschlussvorrichtung (20) am anderen Ende der Kabelanordnung (16) einen zweiten Steckverbinder (23) aufweist.

7. Getriebeeinrichtung nach Anspruch 5 oder 6, wobei
die Druckausgleichsvorrichtung am anderen Ende des Fluidleitelements (32) einen Druckausgleichsadapter (35) aufweist.

8. Getriebeeinrichtung nach Anspruch 6 und 7, wobei
der Druckausgleichsadapter (35) und der zweite Steckverbinder (23) der zweiten Anschlussvorrichtung (20) als separate Komponenten ausgebildet sind.

9. Getriebeeinrichtung nach Anspruch 7 oder 8, wobei
der Druckausgleichsadapter (35) eine Membran (36) und/oder ein Befestigungsmittel (37) zum Befestigen des Druckausgleichsadapters (35) aufweist.

10. Antriebseinrichtung (1) für ein elektrisch antreibbares Fahrzeug (38), umfassend
- eine elektrische Maschine (3),
- eine Getriebeeinrichtung (2) nach einem der vorhergehenden Ansprüche und
- eine eine Drehbewegung der elektrischen Maschine (3) auf die Getriebeeinrichtung (2) übertragende Welle (4).

11. Antriebseinrichtung nach Anspruch 10, wobei
das Getriebegehäuse (7) Teil eines die elektrische Maschine (3), die Getriebeeinrichtung (2) und die Welle (4) einhausenden Gehäuses (6) ist.

12. Antriebseinrichtung nach Anspruch 11, wenn abhängig von Anspruch 9, wobei
der Druckausgleichsadapter (35) durch das Befestigungsmittel (37) am Gehäuse (6) befestigt ist.

13. Antriebseinrichtung nach einem der Ansprüche 10 bis 12, wenn abhängig von Anspruch 6, ferner umfassend
einen Inverter (5), wobei der zweite Steckverbinder (23) der zweiten Anschlussvorrichtung (20) elektrisch mit dem Inverter (5) verbunden ist.

14. Fahrzeug (38), umfassend eine zum Antreiben des Fahrzeugs (38) eingerichtete Antriebseinrichtung (1) nach einem der Ansprüche 10 bis 13.

## Claims

1. Transmission device (2) for an electrically driveable vehicle (38), comprising
- a transmission element (9),
- a parking lock (12), by means of which the transmission element (9) can be blocked and which has a parking lock actuator (14), and
- a transmission housing (7), which encloses the transmission element (9) and the parking lock (12), **characterized by**
- a first connection apparatus (15) with a cable arrangement (16) extending in the transmission housing (7) and a first plug connector (17)
by means of which a first end of the cable arrangement (16) can be contacted from the exterior of the transmission housing (7), wherein a second end of the cable arrangement (16) is electrically connected to the parking lock actuator (14), and
- a pressure equalization apparatus, which runs through the first plug connector (17) of the first connection apparatus (15) and forms a gas-permeable connection between the interior of the parking lock actuator (14) and the exterior of the transmission housing (7),
wherein the second end of the cable arrangement (16) is electrically connected to the parking lock actuator (14) by a second plug connector (18) of the first connection apparatus (15) and the pressure equalization apparatus extends into the second plug connector (18).

2. Transmission device according to Claim 1, wherein the pressure equalization apparatus has a fluid guiding element (27) which connects the first plug connector (17) to the interior of the parking lock actuator (14).

3. Transmission device according to Claim 2, wherein the fluid guiding element (27) is guided together with the cable arrangement (16) from the parking lock actuator (14) to the first plug connector (17).

4. Transmission device according to Claim 2 or 3, wherein
the first plug connector (17) has a plug connector housing (25), contact elements, and through openings which are formed in the plug connector housing and which are each designed to receive one of the contact elements, wherein the fluid guiding element (27) is inserted into one of the through openings.

5. Transmission device according to one of the preceding claims, further comprising
a second connection apparatus (20) with a cable arrangement (21) and a first plug connector (22) which is arranged at one end of this cable arrangement (21) and by means of which an electrical plug connection is formed or can be formed with the first plug connector (17) of the first connection apparatus (15), wherein the pressure equalization apparatus has a fluid guiding element (32), wherein one end of the fluid guiding element (32) extends into the first plug connector (22) of the second connection apparatus (20).

6. Transmission device according to Claim 5, wherein the second connection apparatus (20) has a second plug connector (23) at the other end of the cable arrangement (16).

7. Transmission device according to Claim 5 or 6, wherein
the pressure equalization apparatus has a pressure equalization adapter (35) at the other end of the fluid guiding element (32).

8. Transmission device according to Claim 6 and 7, wherein
the pressure equalization adapter (35) and the second plug connector (23) of the second connection apparatus (20) are designed as separate components.

9. Transmission device according to Claim 7 or 8, wherein
the pressure equalization adapter (35) has a membrane (36) and/or a fastening means (37) for fastening the pressure equalization adapter (35).

10. Drive device (1) for an electrically driveable vehicle (38), comprising
- an electric machine (3),
- a transmission device (2) according to one of the preceding claims, and
- a shaft (4) transmitting a rotational motion of the electric machine (3) to the transmission device (2).

11. Drive device according to Claim 10, wherein
the transmission housing (7) is part of a housing (6) enclosing the electric machine (3), the transmission device (2), and the shaft (4).

12. Drive device according to Claim 11, if dependent on Claim 9, wherein
the pressure equalization adapter (35) is fastened to the housing (6) by the fastening means (37).

13. Drive device according to one of Claims 10 to 12, if dependent on Claim 6, further comprising
an inverter (5), wherein the second plug connector (23) of the second connection apparatus (20) is electrically connected to the inverter (5).

14. Vehicle (38), comprising a drive device (1) according to one of Claims 10 to 13, which is configured to drive the vehicle (38).

## Revendications

1. Dispositif de transmission (2) pour un véhicule (38) pouvant être entraîné électriquement, comprenant
- un élément de transmission (9),
- un frein de stationnement (12) qui permet de bloquer l'élément de transmission (9) et qui présente un actionneur de frein de stationnement (14), et
- un carter de transmission (7) qui loge l'élément de transmission (9) et le frein de stationnement (12), **caractérisé par**
- un premier dispositif de connexion (15) pourvu d'un agencement de câble (16) s'étendant dans le carter de transmission (7) et d'un premier connecteur mâle (17),
qui permet de mettre en contact une première extrémité de l'agencement de câble (16) depuis l'extérieur du carter de transmission (7), une deuxième extrémité de l'agencement de câble (16) étant reliée électriquement à l'actionneur de frein de stationnement (14), et
- un dispositif de compensation de pression qui passe par le premier connecteur mâle (17) du premier dispositif de connexion (15) et réalise une liaison perméable aux gaz entre l'intérieur de l'actionneur de frein de stationnement (14) et l'extérieur du carter de transmission (7),
dans lequel la deuxième extrémité de l'agencement de câble (16) est reliée électriquement à l'actionneur de frein de stationnement (14) par un deuxième connecteur mâle (18) du premier dispositif de connexion (15), et le dispositif de compensation de pression s'étend dans le deuxième connecteur mâle (18).

2. Dispositif de transmission selon la revendication 1, dans lequel
le dispositif de compensation de pression présente un élément conducteur de fluide (27) qui relie le premier connecteur mâle (17) à l'intérieur de l'actionneur de frein de stationnement (14).

3. Dispositif de transmission selon la revendication 2, dans lequel
l'élément conducteur de fluide (27) est guidé conjointement avec l'agencement de câble (16) de l'actionneur de frein de stationnement (14) au premier connecteur mâle (17).

4. Dispositif de transmission selon la revendication 2 ou 3, dans lequel
le premier connecteur mâle (17) présente un boîtier de connecteur mâle (25), des éléments de contact et des ouvertures de passage réalisées dans le boîtier de connecteur mâle, qui sont respectivement réalisées pour recevoir l'un des éléments de contact, l'élément conducteur de fluide (27) étant inséré dans l'une des ouvertures de passage.

5. Dispositif de transmission selon l'une quelconque des revendications précédentes, comprenant en outre
un deuxième dispositif de connexion (20) pourvu d'un agencement de câble (21) et d'un premier connecteur mâle (22) disposé à une extrémité de cet agencement de câble (21) et qui réalise ou permet de réaliser une liaison enfichable électrique avec le premier connecteur mâle (17) du premier dispositif de connexion (15), dans lequel le dispositif de compensation de pression présente un élément conducteur de fluide (32), dans lequel une extrémité de l'élément conducteur de fluide (32) s'étend dans le premier connecteur mâle (22) du deuxième dispositif de connexion (20).

6. Dispositif de transmission selon la revendication 5, dans lequel
le deuxième dispositif de connexion (20) présente un deuxième connecteur mâle (23) à l'autre extrémité de l'agencement de câble (16).

7. Dispositif de transmission selon la revendication 5 ou 6, dans lequel
le dispositif de compensation de pression à l'autre extrémité de l'élément conducteur de fluide (32) présente un adaptateur de compensation de pression (35).

8. Dispositif de transmission selon les revendications 6 et 7, dans lequel
l'adaptateur de compensation de pression (35) et le deuxième connecteur mâle (23) du deuxième dispositif de connexion (20) sont réalisés sous forme de composants séparés.

9. Dispositif de transmission selon la revendication 7 ou 8, dans lequel
l'adaptateur de compensation de pression (35) présente une membrane (36) et/ou un moyen de fixation (37) pour fixer l'adaptateur de compensation de pression (35).

10. Dispositif d'entraînement (1) pour un véhicule (38) pouvant être entraîné électriquement, comprenant
- une machine électrique (3),
- un dispositif de transmission (2) selon l'une quelconque des revendications précédentes, et
- un arbre (4) transmettant un mouvement de rotation de la machine électrique (3) au dispositif de transmission (2).

11. Dispositif d'entraînement selon la revendication 10, dans lequel
le carter de transmission (7) fait partie d'un carter (6) logeant la machine électrique (3), le dispositif de transmission (2) et l'arbre (4).

12. Dispositif d'entraînement selon la revendication 11 lorsqu'elle dépend de la revendication 9, dans lequel l'adaptateur de compensation de pression (35) est fixé au carter (6) par le moyen de fixation (37).

13. Dispositif d'entraînement selon l'une quelconque des revendications 10 à 12 lorsqu'elle dépend de la revendication 6, comprenant en outre
un onduleur (5), dans lequel le deuxième connecteur mâle (23) du deuxième dispositif de connexion (20) est relié électriquement à l'onduleur (5).

14. Véhicule (38), comprenant un dispositif d'entraînement (1) selon l'une quelconque des revendications 10 à 13, conçu pour entraîner le véhicule (38) .
